# EUROPEAN PATENT APPLICATION

(11) **EP 2 075 709 A2**
(43) Date of publication of application: **01.07.2009**
(21) Application number: 08016262.1
(22) Date of filing: 16.09.2008
(51) Int. Cl.: G06F 13/42

(54) **Video data processor and data bus management method thereof**

(30) Priority: 27.12.2007 JP 2007338051; 09.09.2008 JP 2008230750
(71) Applicant: Kabushiki Kaisha Toshiba, Minato-ku, Tokyo 105-8001 (JP)
(72) Inventor: Satoh, Naoko, Minato-ku Tokyo 105-8001 (JP); Yamaguchi, Shuichi, Minato-ku Tokyo 105-8001 (JP); Osaki, Yoshiro, Minato-ku Tokyo 105-8001 (JP); Hoshino, Kouji, Minato-ku Tokyo 105-8001 (JP)
(74) Representative: HOFFMANN EITLE

(57) **Abstract**

In a video data processor (100), the control unit (104) cyclically defines a plurality of slots to the data bus (101), sets band width of each slot to be band width capable of transmitting the video data without missing frames, and assigns the video data to the slots. Only the video data of slots assigned by a bus arbiter (103) may be received transmission permission in a round-robin system, then, the video data of the slots is transmitted to the data bus (101). Thereby, the band of the data bus (101) may be efficiently used without affecting on transmission of video data of which the transmission speed should be kept constant.

## Description

The invention relates to a video data processor, and a data bus management method thereof. More specifically, the present invention relates to a technique for efficiently controlling a band of a data bus for transmitting video data.

In a broadcasting field, a video data processor which uses a semiconductor memory as a recording medium instead of a recording tape has been made practicable. According to this video data processor, recording and playback processing of a plurality of items of video data which has not performed in a system using the recording tape can be performed simultaneously. For instance, in recording video, it becomes able to start playback and edition from a part of which the recording has been completed, transfer the part thereof to another device via a network, copy the part thereof among media, and it becomes able to edit another video while recording the video and to perform the data processing efficiently and quickly.

However, in a case in which the video data processor transmits a plurality of items of video data through a data bus, the transmission of video data of a transmission type, such as copy, with low priority should not affect transmission of a type, such as recording and playback, with high priority. That is, since instability of transmission speed causes a broadcasting accident such as missing of frames, it is necessary for the video data of the transmission type with the high priority to maintain its transmission speed constant. Therefore, in transmission of the video data with the high priority through the data bus, it is needed to always secure a constant data bus band. Meanwhile, in only copying one piece of video data, it is desired to fully utilize performance of the video data processor to complete copying in a short while and efficiently utilize resources.

Therefore, in transmitting the plurality of items of video data through the data bus, the video data processor assigns and manages time slots defining the band of the data bus so as to efficiently use individual functions (Jpn. Pat. Appln. KOKAI Publication No. 2002-165115).

However, in the data processor, in the transmission of the video data to the data bus, using the time slot system of the above poses a problem that transmission efficiency is deteriorated due to free time slots. As regards this problem, to effectively use the free time slots, assigning the video data again to the free time slots is a possible approach; however, the transmission of the video data is interrupted during a change in assignment of the time slots. As a result, there is a possibility that the interruption affects the transmission of the video data of which the transmission speed should be kept constant.

An object of the invention is to provide a video data processor and a data bus management method thereof configured to transmit a plurality of items of video data by efficiently using a band of a data bus without affecting transmission of video data of which the transmission speed should be kept constant.

According to the present invention, there is provided a video data processor (100) in which a plurality of devices (106-109, 200) each processing video data are connected to a data bus (101) and the video data is transmitted and received among arbitrary devices by using the data bus (101), comprising:
a control unit (104) which cyclically defines a plurality of slots in a fixed burst cycle indicating a band for transmitting the video data through the data bus (101), assigns the video data to the slots in response to a transmission request, and transmits the video data assigned to permitted slots through the data bus (101);
a slot management unit (105) which creates slot management information in which slots with the video data assigned thereto for each slot are associated with management information showing transmission origins and transmission destinations of the video data to registration-update the management information; and
a bus arbitration unit (103) which arbitrates the video data to be assigned to the slots and to be transmitted through the data bus (101) by referring to the slot management unit (105), wherein
the control unit (104) sets bust cycles and the number of the slots to which the video data is assigned so as to make transmission speed for reproducing the video data normal speed; and
the bus arbitration unit (103) sequentially specifies only the slots to which the video data assigned, and permits transmission of the video data to the data bus (101), on the basis of the slot management information registered in the slot management unit (105).

According to the present invention, there is provided a data bus management method in which a plurality of devices (106-109, 200) each processing video data are connected to a data bus (101) and the video data is transmitted and received among arbitrary devices by using the data bus (101), comprising:
control-processing which cyclically defines a plurality of slots in a fixed burst cycle indicating a band for transmitting the video data to the data bus (101), assigns the video data to the slots in response to a transmission request, and transmits the video data assigned to permitted slots through the data bus (101) ;
slot-management-processing which creates slot management information in which slots with the video data assigned thereto for each slot are associated with management information showing transmission origins and transmission destinations of the video data to registration-update the management information; and
bus-arbitration-processing which arbitrates the video data to be assigned to the slots and to be transmitted through the data bus (101) by referring to the slot management information, wherein
the control-processing sets bust cycles and the number of the slots to which the video data is assigned so as to make transmission speed for reproducing the video data normal speed; and
the bus arbitration processing sequentially specifies only the slots to which the video data assigned, and permits transmission of the video data to the data bus (101), on the basis of the slot management information registered in the slot management processing.

The invention can be more fully understood from the following detailed description when taken in conjunction with the accompanying drawings, in which:
FIG. 1 is a schematic view depicting a broadcast recording system including a video data processor of an embodiment of the present invention;
FIG. 2 is a block diagram depicting a configuration of the video data processor depicted in FIG. 1;
FIGS. 3A and 3B are slot management tables each depicting use situations for each slot of data buses of the video data processors of the embodiments;
FIGS. 4A, 4B and 4C are views each depicting combinations of slots using the data buses of the video data processors of the embodiments and video data to be assigned to individual slots;
FIG. 5 is a resource consumed amount information table of the video data processor of the embodiment;
FIG. 6 is a slot 0 management table for managing video data assigned to a slot 0 of the video data processor of the embodiment;
FIG. 7 is a resource remaining amount information table of the video data processor of the embodiment;
FIG. 8 is a priority information table depicting priority of processing of the video data processor of the embodiment;
FIG. 9 is a priority table depicting priority for each transmission type of video data in the video data processor of the embodiment;
FIG. 10 is a sequence view depicting a flow of processing of bus arbiter and a control unit in the video data processor of the embodiment;
FIG. 11 is a flowchart depicting a flow of processing of a bus arbiter and a control unit using the slot 0 in the video data processor of the embodiment;
FIG. 12 is a flowchart depicting a flow of processing from an input of an assignment command of video data up to an end of assignment of the video data in the video data processor of the embodiment;
FIG. 13 is a flowchart depicting a flow of processing to end data transmission and release slots in the video data processor of the embodiment;
FIG. 14 is a sequence view depicting a flow of processing in a case in which a hardware configuration achieves processing of the video data processor of the embodiment;
FIG. 15 is a flowchart depicting the flow of the processing of the bus arbiter in the video data processor of the embodiment;
FIG. 16 is a flowchart depicting a flow of processing of a queue processing unit depicted in FIG. 15; and
FIG. 17 is a view for explaining a way of setting queue of the queue processing unit.

Hereinafter, embodiments of the invention will be described with reference to the drawings.

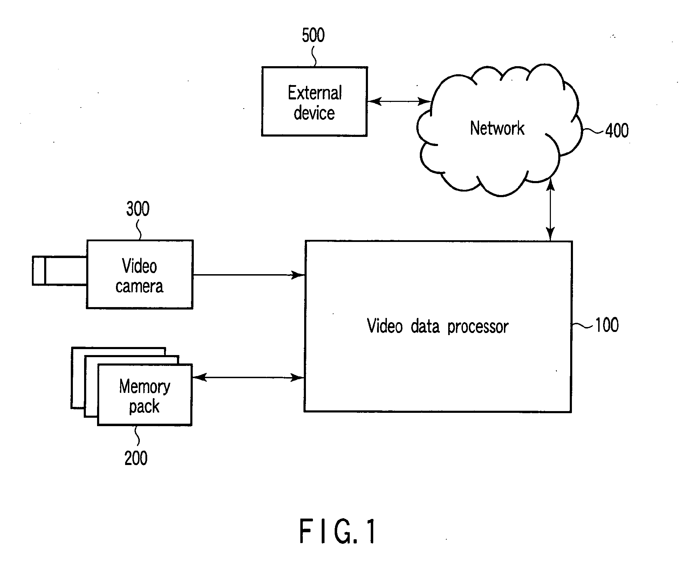

FIG. 1 is a schematic view illustrating an embodiment of a broadcasting program recording system including a video data processor of the invention. In FIG. 1, a video data processor 100 has a function of recording video data filmed with a video camera 300. The processor 100 has a function of making a memory pack 200, which records the video data in a semiconductor as a recording medium, attachable and detachable, and of transmitting and receiving the video data to and from the attached memory pack 200. The processor 100 further has a function of transmitting the recorded video data to an external device 500 via a network 400.

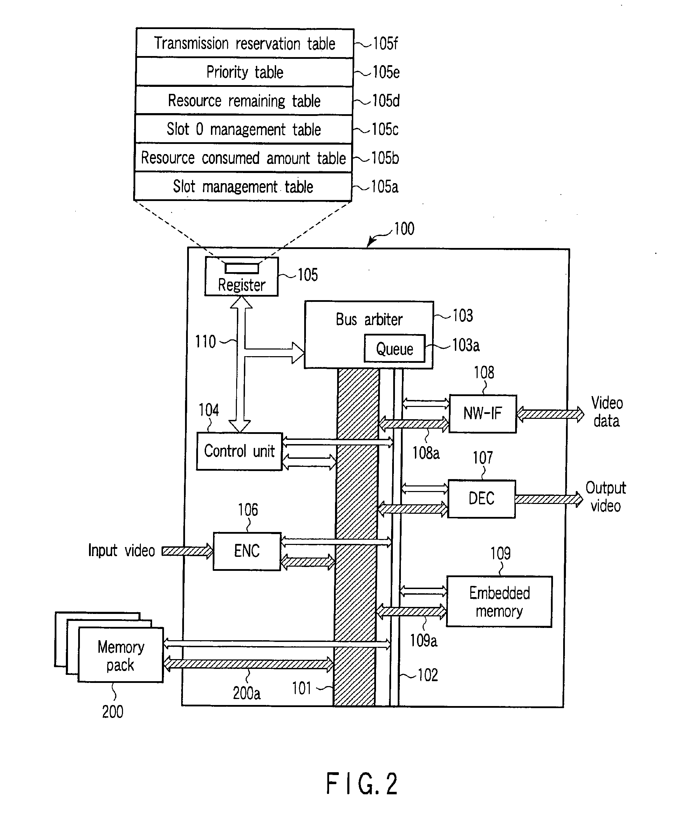

FIG. 2 shows a block diagram illustrating the configuration of the processor 100 of the invention. The processor 100 includes a data bus 101 for transmitting the video data and a control bus 102 for transmitting control data. The data bus 101 and the control bus 102 are each connected to a bus arbiter 103, a control unit 104, an encoder (ENC) 106, a network interface (NW-IF) 108 and a embedded memory 109.

The data bus 101 is a transmission path for transmitting the video data. The control bus 102 is a transmission path for a signal controlling the video data to be transmitted through the data bus 101. The bus arbiter 103 arbitrates the video data to be transmitted through the data bus 101. The control unit 104 performs a variety of items of control of the video data to be transmitted through the data bus 101. The ENC 106 encodes the input video data. The DEC 107 decodes the video data to be output. The NW-IF 108 receives and transmits the video data to and from the network 400. The embedded memory 109 stores the video data.

The processor 100 includes a mounting mechanism (not shown) for connecting the memory pack 200 to the data bus 101 and the control bus 102 in a freely attachable and detachable manner in order to mutually transmit and receive the video data to and from the memory pack 200 disposed outside.

Further, the bus arbiter 103 and the control unit 104 are connected to a register 105 through a signal line 100 that is a transmission path which is different from that of the control bus 102. The register 105 stores a slot management table 105a, a resource consumed amount table 105b, a slot 0 management table 105c, a resource remaining amount table 105d, a priority table 105e, and a transmission reservation table 105f for storing slot management information, resource consumed amount information, slot 0 (a plurality of assigned slots) information, resource remaining amount information, priority information, and transmission reservation information, respectively.

When any of the memory pack 200, the ENC 106, the DEC 107, the NW-IF 108 and the embedded memory 109 mutually transmit and receive the video data, the video data processor 100 with the aforementioned configuration, the video data processor 100 with the aforementioned configuration transmits the video data through the data bus 101. At this moment, the control unit 104 controls assignment of the video data to be transmitted through the data bus 101 because a capacity of video data which can be transmitted through the data bus 101 is limited.

Band assignment of the data bus 101 for effectively use the band of the data bus 101 will be described.

The transmission speed of the video data to be transmitted through this data bus 101 is required as transmission speed which may reproduce the video data without missing frames. Therefore, the transmission speed in transmitting the video data through the data bus 101 is set a transmission speed, which may reproduce the video data without missing frames, as a reference speed, and video data transmission period on the data bus 101 should be sectioned for each fixed time period capable of securing the reference speed. A band width of video data to be assigned to the fixed time section (this time section is referred to as "burst cycle") is set as one unit, and the band width is referred to as a slot. In this way, a band for each slot becomes wide in a certain extent; the assignment of the video data becomes further easy. The number of the slots is decided on the basis of a manner how many band widths of one slot (i.e., how many slots) may be put in the band width of the data bus 101.

In this embodiment, it is assumed that the number of slots is set five from the slot 0 to the slot 4. The control unit 104 assigns the video data to five slots each having relatively wide band and then controls the band of the video data to be transmitted through the data bus 101.

In this way, the control unit 104 does not assign the band width necessary for the transmission of each item of video data to the slot obtained by calculating at every time, but prepares slots of burst cycles to be the transmission speed capable of reproducing the video data without missing frames to assign the video data to the slots, and manages use situations of the slots.

Meanwhile, the arbiter 103 notifies a signal, having propriety (permission/no permission) of transmission through the data bus 101 of the video data assigned to the slots by the control unit 104, to the control unit 104 through the signal line 110. The control unit 104 which has received the notification transmits the video data assigned to the slots through the data bus 101 only in the burst cycles of the permitted slots. Then, the control unit 104 controls execution so as to repeatedly execute these operations in turn for each slot with the video data assigned thereto. Hereinafter, this execution is referred to as "round-robin". In this way, using only the slots with the video data assigned thereto for the round-robin to transmit the video data though the data bus 101 reduces the time in which the data bus 101 does not transmits the video data without having to assign the video data again to the free slots.

It is needed to control a time interval between a slot and the next slot because the video data should be transmitted at fixed transmission speed for the playback of the video data, etc. Therefore, the bus arbiter 103 is kept in a standby state for a time corresponding to the burst cycle after the transmission of a slot is permitted, and then notifies the control unit 104 of permission of the transmission of the next slot.

An embodiment for transmitting the video data through the data bus 101 by means of the bus arbiter 103 will be described.

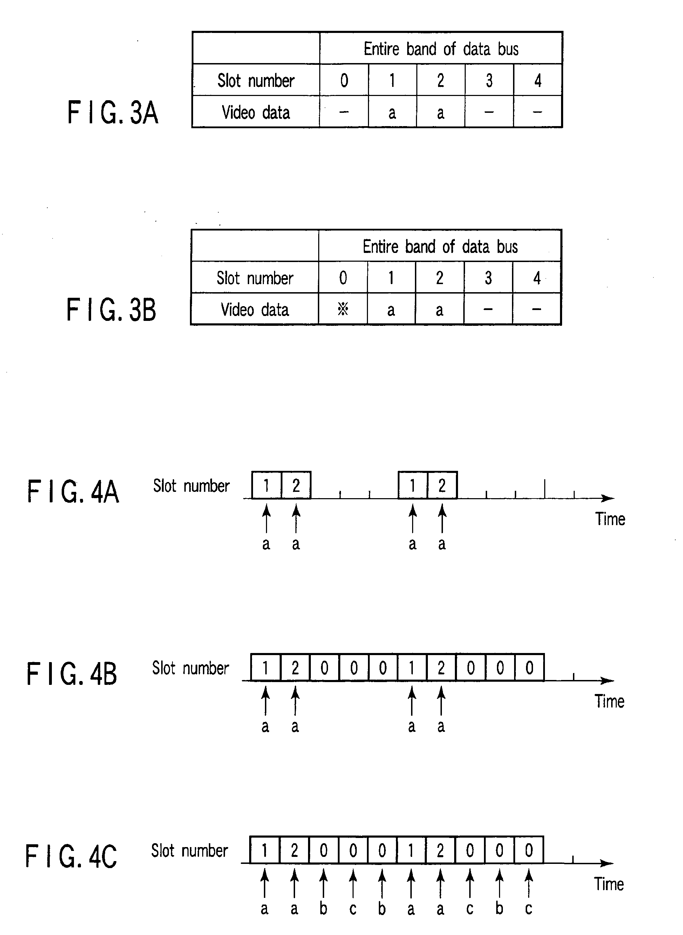

FIG. 3A shows an example of a slot management table 105a showing which piece of video data is assigned to which slot, and the table 105a is one item of the information stored in the register 105. This example shows a case in which the band of the data bus 101 is devised into five and there are five slots. The slots 1-4 are used for assigning the video data to which fixed transmission speed for recording or playback is required, and the slot 0 is used for assigning the video data to which arbitrary transmission speed is allowed for copying or transmission.

It is assumed a case in which video data "a" of which the frame length is worth of two slots is transmitted at fixed speed for playback. In this case, the video data "a" is assigned to the continuous slot 1 and slot 2. At this moment, the video data assigned to the slots 1, 2 are transmitted in turn without leaving an interval.

To transmit the video data "a" at the fixed time, as is shown, for instance, in FIG. 4A, the arbiter 103 repeatedly transmits the video data "a" assigned to the slots 1 and 2 in turn in the back of a time interval of three slots next the slot 2. In this way, even in a state in which the video data is not assigned to every slot, the transmission speed of the video data to be transmitted through the data bus 101 may be adjusted in the same way in which a time slot depending on the conventional technique forms one frame by five slots (a flame length is worth of five slots).

In the embodiment given above, the band of one slot is set to a width through which the video data may be transmitted without missing flames then redundancy of time in one burst cycle may be reduced. Further, to make the transmission speed constant, the bus arbiter 103 arbitrates to leave a time interval of integral number times of the burst cycle between slots with the video data "a" assigned thereto. However, the video data has not been transmitted in the free time period (time interval), so that the band of the data bus 101 may not be used effectively. Then, in an embodiment hereinafter, the video data of which the transmission speed may not be constant is assigned to the free time period to be transmitted through the data bus 101.

To transmit the video data of which the transmission speed may not be constant through the data bus 101 also in the free time period, an arbitration method by permitting transmission by means of the bus arbiter 103, as is described in the foregoing embodiment, is effective. That is, the control unit 104 preliminarily decides a specified slot as a band in which the video data which may be transmitted in occurrence of the free time period, and registers the video data to transmit at the specified slot. When the specified slot is permitted to transmit the video data through the data bus 101 in the free time period by the bus arbiter 103, video data which has been registered in turn is transmitted at the specified slot.

According to this configuration, to transmit the video data for the free time period, it is not necessary for the control unit 104 to newly assign the video data to any slot equivalent to the free time period. In the way, when the control slot 104 does not assign the video data again to slots, and when the bus arbiter 103 only arbitrates for each slot, the data bus 101 may transmit the video data even in its free time period without affecting on the transmission of the video data required to be transmitted at constant transmission speed.

However, to transmit the video data of which the transmission speed may not be constant through the data bus 101 even in the free time period between the transmission slots of the video data of which the transmission should be constant, it is necessary for the control unit 104 to set priority for each transmission type of the video data, or control the entire processing, such as processing in a case that the priority is low. Therefore, in this embodiment, entire processing in which the control unit 104 assigns the video data to slots when the control unit 104 controls to effectively utilize the time period in which the data bus 104 does not transmit the video data will be described.

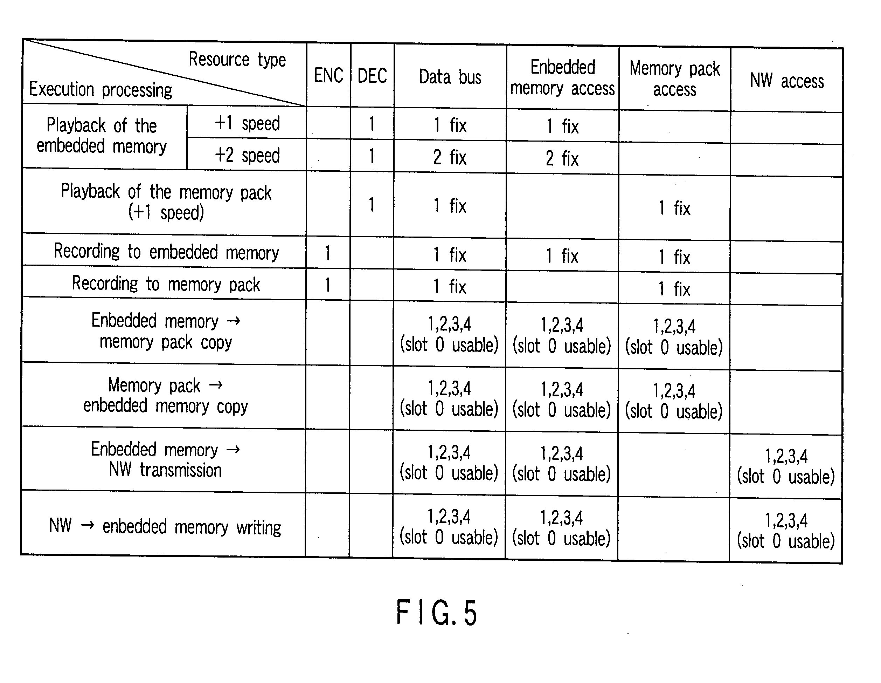

FIG. 5 shows an example of a resource consumed-amount information table 105b illustrating information of a resource consumed amount needed in response to transmission types, and the table 105b is stored in the register 105.

For instance, in reproducing the video data stored in a embedded memory 109, one decoder is used, in reproducing the slot of the data bus 101, two decoders are always used, and in reproducing the slot of a embedded memory access 109a, two decoders are always used. In reproducing at normal speed, each one slot of the data bus 101 and of the embedded memory access 109a are used, respectively. In reproducing at double speed, each two slots of the data bus 101 and of the embedded memory access 109a are used, respectively.

When the transmission types are copied from the embedded memory 109 to the memory pack 200, one to four slots of the data bus 101 can be allocated for copying, and one to four slots of the embedded memory access 109a can be allocated for copying. It is possible to use slot 0 (free time period assignment slot), which will be described later.

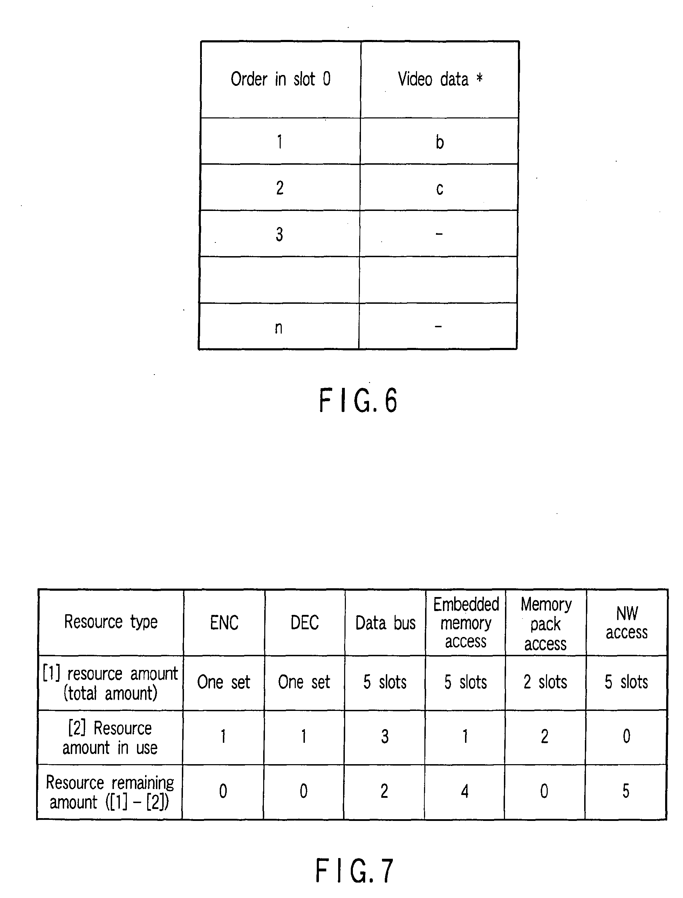

The slot 0 will be described by referring to FIGS. 3B, 4B, 4C, and 6. In FIG. 3B, the video data "a" is assigned to the slots 1, 2, and a flag (* mark) indicating a free time period assigned slot is put to the slot 0. In a case that the transmission type of the video data "a" assigned to the slots 1, 2 is needed to transmit the video data "a" through the data bus 101 at constant speed, time periods in which the video data is not transmitted through the data bus 101 as shown in FIG. 4A occurs. To effectively utilize this time periods, the slot 0 is used so as to transmit the video data of different transmission types in the entire time periods in which the video data is not transmitted as shown in FIG. 4B. A slot 0 management table 105c of FIG. 6 stored in the register 105 manages the video data to be assigned to the slot 0 in addition to the slot management table shown in FIG. 3B. In an example shown in FIG. 6, a plurality of pieces of video data of video data "b" and video data c that is video data which is not needed to be transmitted at constant speed is assigned to the slot 0, and each managed in the slot 0 together with identification information.

The burst cycle, which makes the slot 0 transmit the video data to the data bus 101 for the first time, transmits the video data "b", and the burst cycle, which makes the slot 0 transmit the video data to the data bus 101 for the next time, transmits the video data 2c", as shown in FIG. 4C. The video data assigned to the slot 0 is transmitted in turn at every time of turn of the burst cycle of the slot 0 has come in a manner in which the burst cycle of the slot 0 for transmitting the video data to the data bus 101 for the next time transmits the video data "b" for the second time, and the next slot 0 transmits the video data "c" when entire video data assigned to the slot 0 is transmitted once for each.

As is represented in a data bus transmission system by the slot 0, to transmit video data of another transmission type in a time period in which the video data is not transmitted through the data bus 101, it is necessary to manage the data bus 101 and the remaining amount of other resources. A table for managing the remaining amount of the resources will be shown in

### FIG. 7.

FIG. 7 shows an example of the resource consumed amount table (resource consumed amount information) 105b indicating data resource total amounts, resource amounts in use and resource remaining amount at the slots on the transmission paths connecting among, the data bus 101 to be used in response to transmission types of the video data, at the embedded memory 109 to be used in response to a processing type of the video data, at the memory pack 200, and at the NW-IF 108, (referred to as a embedded memory access 109a, a memory pack access 200a, a NW-IF access 108a, respectively), at the ENC 106 and at the DEC 107, and then, the table 105b is stored in the register 105.

In this example, there is one ENC 106 and one DEC 107, respectively, there are five slots of the embedded memory access 109a and the NW-IF access 108a, respectively, and there are two slots of the memory pack access 200a. The information of the resource remaining amount may manage the resource remaining amount by writing the resource amount in use into this table 105b.

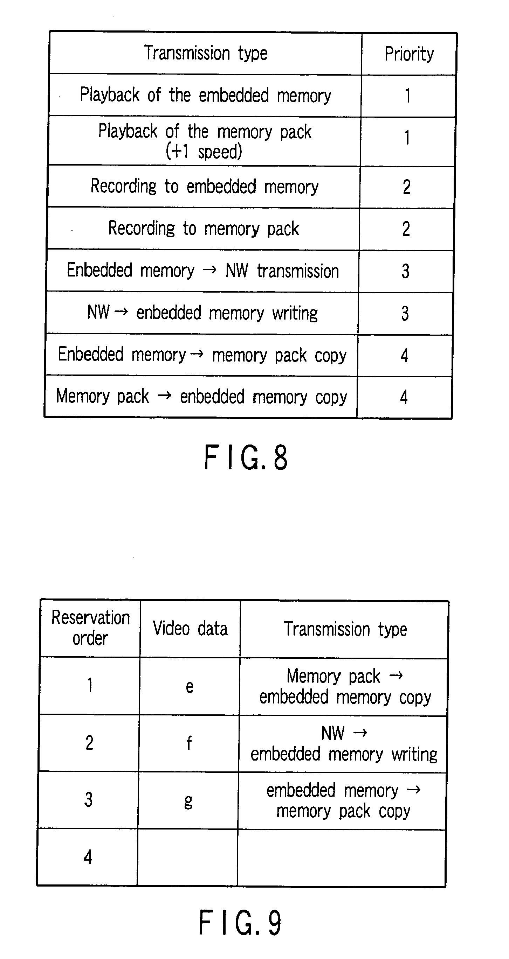

To effectively use the band of the data bus 101, it is preferable to set the priority for each transmission type. The setting of the priority will be described with reference to FIG. 8.

FIG. 8 shows an example of a priority table 105e for associating the transmission types with the priority to manage the priority, and the table 105e is stored in the register 105. In this example, it is assumed that the smaller the value of the priority is, the higher the priority is, and the larger the value of the priority is, the lower the priority is. For instance, in a case in which the video data filmed with the video camera 300 is reproduced from the embedded memory 109 or the memory pack 200, it is necessary for the transmission types to be given the highest priority for the video data processor 100 of which the video data is used for a broadcasting. Therefore, the transmission types are indicated as 1 in FIG. 8. In a case in which the video data is copied between the embedded memory 109 and the memory pack 200, since the priority is low in comparison with other transmission types, the priority is indicated as 4 that indicates the lowest priority in FIG. 8.

To effectively use the band of the data bus 101, it is preferable to enable making transmission reservations. The transmission reservations will be described with reference to FIG. 9.

FIG. 9 shows an example of a transmission reservation table 105f for managing video data which has been reserved so as to start its transmission after the resource remaining amount becomes sufficient in a case in which the resource remaining amount is insufficient in transmitting the video data and its priority is lower than those of the transmission types of the video data in transmission. The table 105f is stored in the register 105.

The reserved video data is managed together with numbers of reserved order and reserved transmission types. For instance, FIG. 9 shows that the first reserved data is video data "e" and that its transmission type is copying from the memory pack 200 to the embedded memory 109. FIG. 9 shows that the second reserved data is video data "f" and that its transmission type is writing from the NW-IF 108 to the embedded memory 109. FIG. 9 shows that the third reserved data is video data "g" and that its transmission type is copying from the embedded memory 109 to the memory pack 200.

Concrete processing flow for implementing the embodiment of the above will be described.

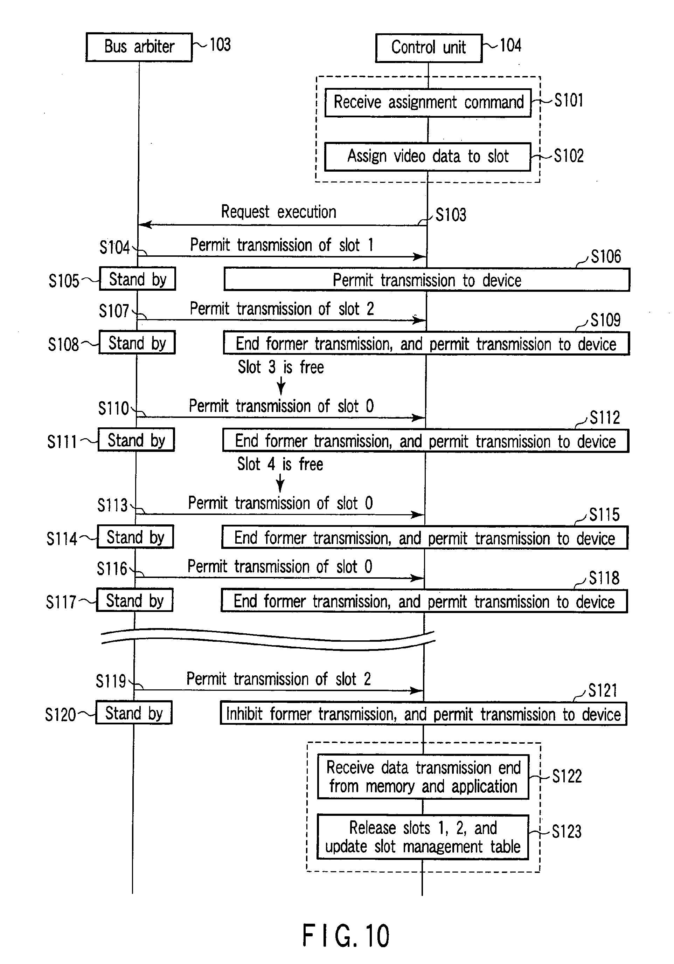

Firstly, a processing flow of the bus arbiter 103 and the control unit 104 for making the data bus 101 transmit the video data at timing shown in FIG. 4C will be described by referring to FIG. 10.

When receiving a command to assign the specified video data to a slot in order to transmit the video data (Step S101), the control unit 104 assigns the specified video data to the slots (Step S102). In the case of this example, the control unit 104 assigns the video data "a" to the slots 1, 2 to output a transmission execution request of the assigned slots to the bus arbiter 103 (Step S103).

The bus arbiter 103 which has received this request notifies the transmission permission of the slot 1 to the control unit 104 (Step S104), and enters a standby state by a time period of one burst cycle (Step S105). The control unit 104 which has received this notification transmits the transmission permission to the external device so as to transmit the video data "a" assigned to the slot 1 through the bus 101 only in the burst cycle (Step S106). After this, the bus arbiter 103 notifies the transmission permission of the slot 2 to the control unit 104 (Step S107), and enters a standby state by only in the time period of one burst cycle (Step S108). The control unit 104 which has received this notification instructs the external device so as to end the transmission of the video data of slot 1, and transmits the transmission permission to the external device so as to transmit the video data "a" assigned to the slot 2 thorough the data bus 101 only in the burst cycle (Step S109).

When the transmission of the video data "a" of slot 2 has ended, since a slot 3 to be executed next has been free, the bas arbiter 103 specifies a slot 0 to notify its transmission permission to the control unit 104 (Step S110), and enters a standby state for a time period by one burst cycle (Step S111). The control unit 104 which has received this notification transmits video data "b" assigned to the slot 0 in the same way as that of Step S109 (Step S112).

When the transmission of the video data "b" of the slot 0 has ended, since a slot 4 to be executed next has been free, the bus arbiter 103 specifies the slot 0 to notify its transmission permission to the control unit 104 (Step S113), and enters a standby state by a time period by one burst cycle (Step S114). The control unit 104 which has received this notification transmits video data "c" assigned to the slot 0 in the same way as that of Step S109 (Step S115).

When the transmission of the video data "c" of the slot 0 has ended, since a slot 5 to be executed next has been free, the bus arbiter 103 specifies the slot 0 to notify its transmission permission to the control unit 104 (Step S116), and enters a standby state of the time period by one burst cycle (Step S117). The control unit 104 which has received this notification transmits video data "b" assigned to the slot 0 in the same way as that of Step S109 (Step S118). In this way, in succession to the transmission of the video data of slots 1, 2, the processing of slot 0 is repeated three times, the transmission of the video data "a" of the slots 1, 2 is repeated again. The bus arbiter 103 notifies the transmission permission of the slot 2 that is the final transmission of the video data "a" to the control unit 104 (Step S119) to enter a standby state of a time period by one burst cycle (Step S114). The control unit 104 which has been received this notification transmits the finial transmission of the video data "a" assigned to the slot 2 (Step S121).

When the entire transmission of the video data "a" assigned to the slots 1, 2 has ended, since the slots 1, 2 become free slot, when receiving the end of the data transmission from the memory and the application (Step S122), the control unit 104 deletes the video data "a" stored in columns of the slots 1, 2 of the slot management table (FIG. 4C), newly assigns video data in the column, and updates the slot management table 105a (Step S123).

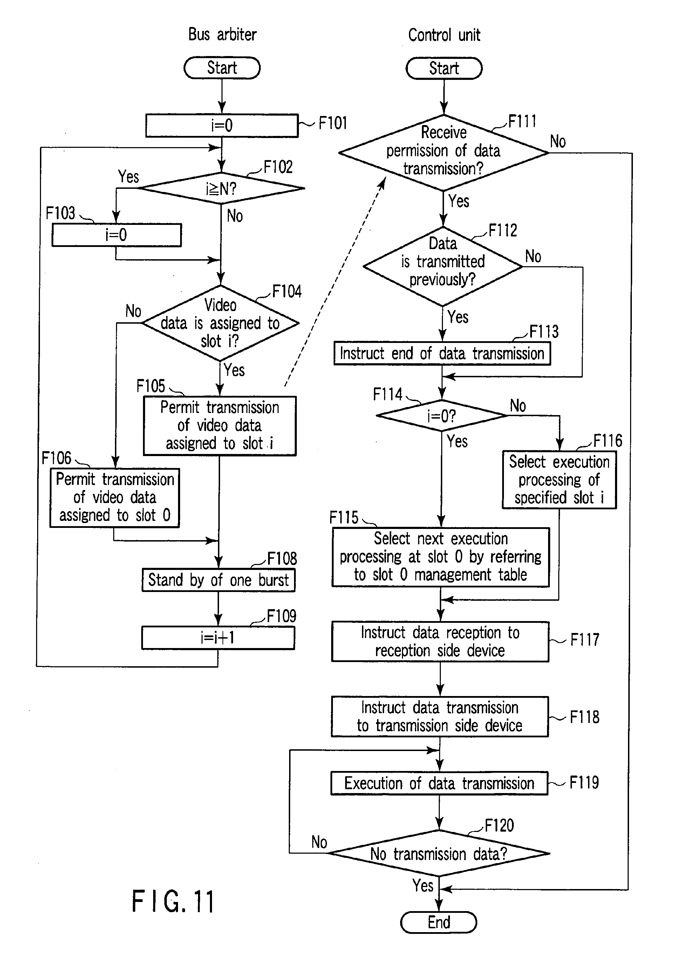

The bus arbiter 103 arbitrates the data bus 101 so as to transmit the slot with the video data "a" assigned thereto and control transmission intervals. Thus, this embodiment focuses attention to the way of the arbitration of the bus arbiter 103, and operations of the bus arbiter 103 will be described with reference to FIG. 11.

In FIG. 11, when receiving the slot transmission request from the control unit 104 at first, the bus arbiter 103 initializes a counter of a slot number so as to satisfy an equation "i = 0" (Step F101). The bus arbiter 103 determines if a slot number i has reached N (maximum number of slots) (Step F102), if it has not been reached, the counter is left as it is, and conversely, if it has reached, the counter is initialized so as to satisfy the equation "i = 0" (Step F103). The bus arbiter 103 determines if the video data is assigned to the slot i (Step F104), if it has been assigned, the bus arbiter 103 notifies transmission permission to the control unit 104 so as to transmit the video data assigned to the slot i (Step F105). If it has not been assigned, the arbiter 103 notifies the transmission permission to the control unit 104 so as to transmit the video data assigned to the slot 0 (Step F106). After notifying the transmission permission, the bus arbiter 103 enters a standby state by a time period of one burst cycle (Step F108), sets the slot number i to "i + 1", and returns to Step F102 to repeatedly execute a series of processing.

Meanwhile, the control unit 104 enters a standby state until the transmission permission of the video data from the bus arbiter 103 is received (Step F111). When receiving the transmission permission, the control unit 104 determines whether or not the former slot has performed data transmission (Step F112), and if it is determined affirmatively, the control unit 104 instructs the data transmission end to the corresponding device (Step F113). The control unit 104 determines if the slot number i is 0 (Step F114). If the number i is 0, the control unit 104 selects the next transmission processing at the slot 0 by referring to the slot 0 management table (Step F115), and if the number i is not 0, the bus control unit 104 selects the transmission processing at the specified slot number i (Step F116). At this moment, the control unit 104 instructs data reception to a reception side device (Step F117), instructs data transmission to a transmission side device (Step F118), executes data transmission (Step F119), and repeats the data transmission until transmission data in the slot i runs out (Step F120).

As mentioned above, by making the band of one slot relatively wide so as to enable transmitting the video data without missing frames, it becomes not necessary to calculate the number of slots capable of securing a necessary band at every transmission request for the video data because the slots conventionally each have narrow bands and are large in number, and it becomes able to reduce processing to assign the video data to the slots.

Since the band of a prepared slot is one which is necessary to transmit the video data, stable transmission speed is kept, and the redundancy in the one burst cycle may be reduced. As a result, the control unit 104 can stably and efficiently control the band of the data bus 101.

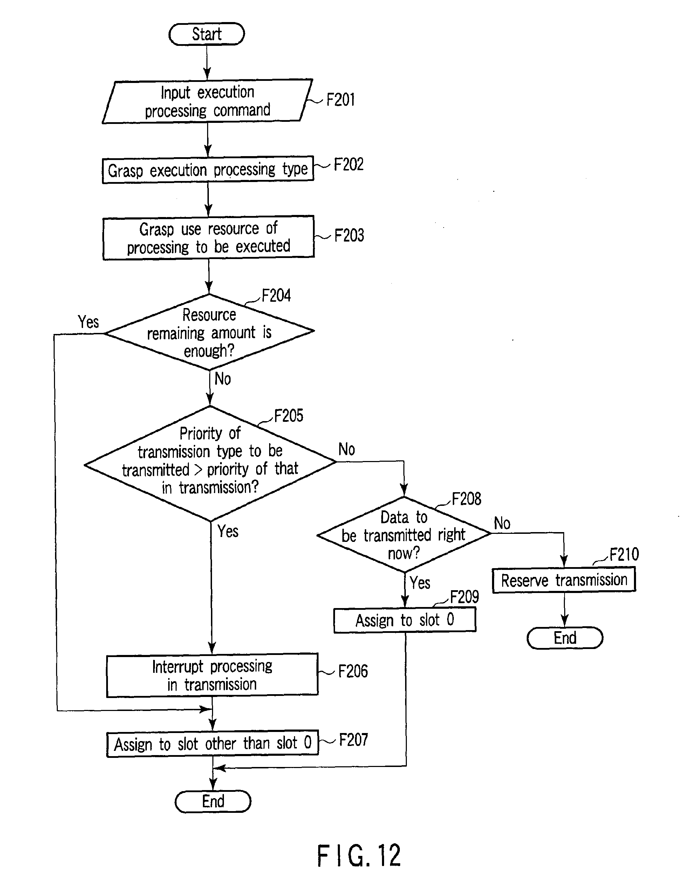

The processing from the input of the assignment command of the video data to the end of the assignment of the video data performed by the control unit 104 will be described by referring to FIG. 12.

At first, when receiving an execution processing command in order to assign the video data to a slot for transmitting the video data (Step F201), the control unit 104 grasps the transmission type specified in the execution processing (Step F202), and grasps a resource consumed amount which is needed to transmit in the transmission type with reference to the resource consumed information of FIG. 5 (Step F203). Next, the control unit 104 compares the resource consumed amount of the transmission type with the resource remaining amount of FIG. 7 to determine whether or not the resource remaining amount is enough (Step F204). If the resource remaining amount is not enough, the control unit 104 refers to the priority information for each transmission type shown in FIG. 8 to determine whether or not the priority of the transmission type in transmission is lower than that to be used for transmission (Step F205).

If the priority of the transmission type in transmission is higher, the control unit 104 interrupts the transmission in transmission (Step F206), and assigns the video data to the slots other than the slot 0 (Step F207). If the priority of the transmission type to be transmitted is higher, the control unit 104 determines whether or not the video data should be transmitted right not (Step F208). If the video data is one to be transmitted right now, the control unit 104 assigns the video data to the slot 0 (Step F209). If the video data is not one to be transmitted right now, the video data is made reservation for transmission (Step F210).

If it is determined that the resource remaining amount is enough in Step F204, the control unit 104 shifts to Step F207 to assign the video data to the slots other than the slot 0. After assigning the video data to the slots, the control unit 104 issues an execution request to the bus arbiter 103 to end the series of processing. After the bus arbiter 103 receives the execution request for the video data, the control unit 104 allows the bus arbiter 103 to transmit the video data through the data bus 101 for each slot.

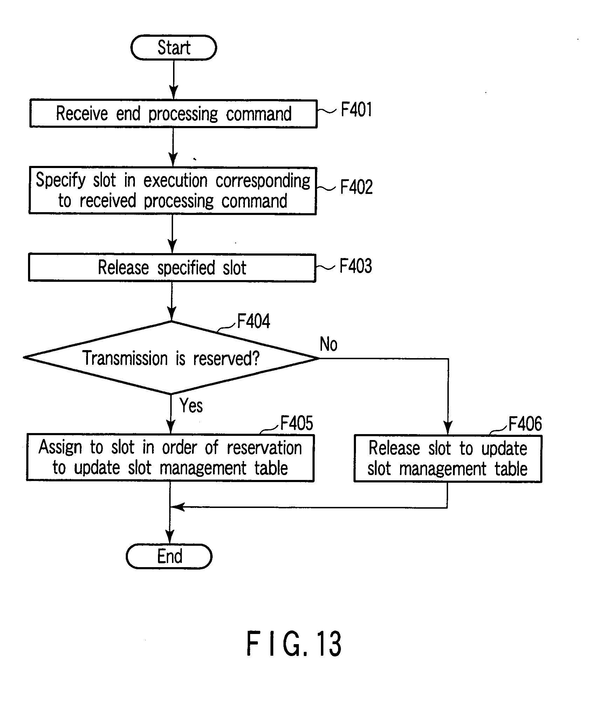

The processing of terminating the data transmission to release (eliminate completed processing from slot management table or slot 0 management table) the slots by means of the control unit 104 will be described with reference to FIG. 13.

When receiving the end processing command (Step F401), the control unit 104 specifies the slots in transmission corresponding to the received processing command (Step F402) to release the specified slots (Step F403). Then, the control unit 104 refers to the transmission reservation table 105f to determine if any transmission has been reserved (Step F404). If any transmission has been reserved, the control unit 104 assigns the slots in order of the reservation to update the slot management table 105a (Step F405), and if the transmission has not been reserved, the control unit 104 releases the slots to update the slot management table 105a (Step F406). Thereby, the series of processing by the control unit 104 is terminated.

As described above, setting the band of the slot to which the video data is assigned to the band which is necessary to transmit one piece of video data facilitates management of the video data and the slots and the relationships therebetween. In a case of a transmission type of which the transmission speed should be constant, the control unit 104 assigns the video data to slots 1-4 to change the transmission speed. In a case of effective use of the data bus 101 in a time period in which the video data is not transmitted, the band of the data bus 101 may be efficiently used by assigning the video data to the slot 0.

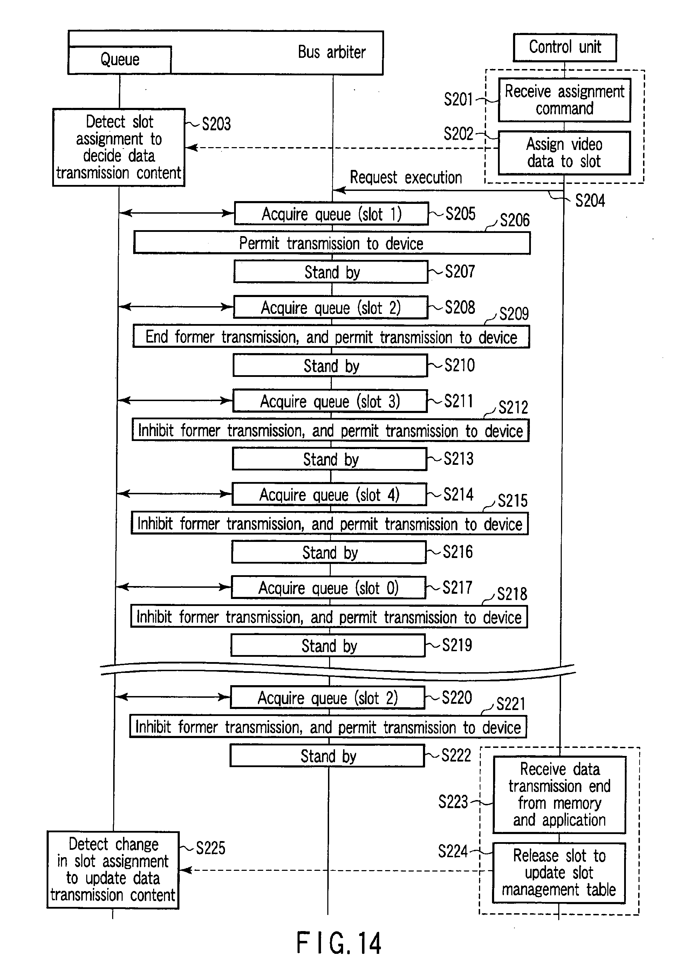

While the foregoing embodiment has been described in the configuration in which the bus arbiter 103 and the control unit 104 are achieved by the software, it is also able to achieve the processing by a hardware configuration as is shown in FIG. 14. In this case, the bus arbiter 103 gives the transmission permission to the device on behalf of the control unit 104. Further, the bus arbiter 103 is provided with a queue processing unit 103a which grasps assignment content of the slots sequentially to generate a queue for notifying the assignment to the next slot in necessary.

In FIG. 14, when receiving the command in order to assign the specified video data to the slot (Step S201), the control unit 104 firstly assigns the specified video data to the slot (Step S202). This assignment is notified to the queue processing unit 104a. After receiving the notification, the processing unit 104a detects the slot assignment and decides data transmission content (data transmission origin device, data reception destination device) (Step S203).

When the transmission execution request for the assigned slot is issued from the control unit 104, the bus arbiter 103 acquires the data transmission content of the slot 1 from the processing unit 103a (Step S205), notifies the transmission permission to the corresponding-device, instructs so as to transmit the video data assigned to the slot 1 through the data bus 101 only in a burst cycle (Step S206), and then, enters a standby state only in a time period by one cycle of the burst cycle (Step S207). After entering the standby state, the bus arbiter 103 acquires the data transmission content of the slot 2 from the queue processing unit 103a (Step S208), instructs so as to end the transmission of the video data of slot 1, transmits the transmission permission to the device so as to transmit the video data assigned to the slot 2 to the data bus 101 only in the burst cycle (Step S209), and enters a standby state by the time period of the one cycle of the burst cycle (Step S210).

In the same way, the bus arbiter 103 acquires a queue of the slot 3 (Step S211), ends the transmission of the former slot 2 and notifies the transmission permission of the next slot 3 to the device (Step S212), enters a standby state by one burst cycle (Step S213), acquires a queue of the slot 4 (Step S214), notifies transmission end of the former slot 3 and transmission permission of the next slot to the device (Step S215), enters a standby state by one burst cycle (Step S216), acquires a queue of slot 0 (Step S217), and enters a standby state by one burst cycle (Step S219) in turn. The bus arbiter 103 finally performs queue acquisition of the slot 2 (Step S220), the end of the transmission of the former slot 4 and the notification of the transmission permission of the next slot 0 to the device (Step S221), and performs entering a standby state by one burst cycle (Step S223).

When the entire transmission of the video data assigned to each slot, the slots become free. Therefore, when receiving the data transmission end from the memory and application (Step S223), the control unit 104 deletes the video data stored in each slot column of the slot management table 105a (release of slots), newly assigns the video data to each column to update the management table 105a (Step S224), and notifies the assignment to the queue processing unit 103a. The processing unit 103a detects the change in slot assignment in accordance with the notification to update the data transmission content (Step S225).

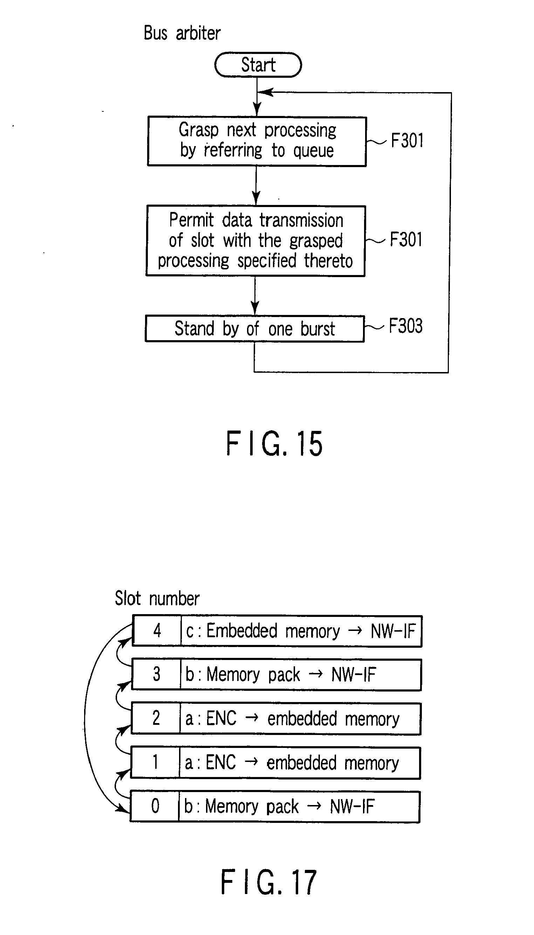

In the processing of the above, the bus arbiter 103 firstly referees to the queue to grasp the next processing as is shown in FIG. 15 (Step F301), permits the data transmission of the slot to which the grasped processing is specified (Step F302), and after entering the standby state by one burst cycle (Step F303), returns to the processing in Step F301 to repeat the processing.

The queue processing unit 103a starts with changes in the slot management table 105a and in the slot 0 management table 105c as a trigger to initialize the counter of the slot number to "i = 0" (Step F501). Next, the processing unit 103a determines if the slot number is i or 0 (Step F502), and if the slot number is not 0, determines if the video data has been assigned to the management table 105a (Step F503). If "i = 0" is satisfied in the processing of Step F502, or if the video data has not been assigned to the management table 105a in the processing of Step F503, the processing unit 103a sets the video data assigned to the slot 0 to the queue (Step F504). If the video data has been assigned to the management table 105a in the processing of Step F503, the processing unit 103a sets the video data assigned to the slot i to the queue (Step F505).

When each processing in Steps F504, F505, the processing unit 103a determines whether or not the slot number i has exceeded N (N is maximum value of the number of slots) (Step F506), if it has not exceeded, the processing unit 103a sets the slot number i to "i + 1" to return to step F502 and repeats a series of processing. If the slot number i has exceeded N, the processing unit 103a ends the series of processing.

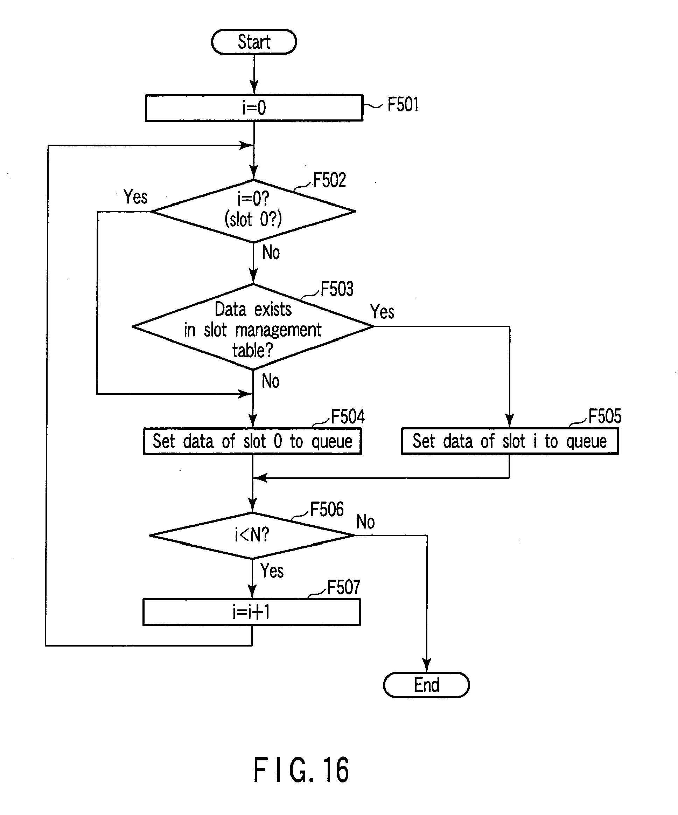

In the processing of the above, the queue processing unit 103a cyclically sets the processing content of each slot to the queue as follows: slot 0 (data transmission processing from the memory pack to the NW-IF as processing "b") → slot 1 (data transmission processing from the ENC to the embedded memory) → ... → slot 4 (data transmission processing from the embedded memory to the NW-IF as processing c) → slot 0 → ..., , as shown in FIG. 17. In a case in which the processing content is set to the queues at the second times or later, the processing shown in FIG. 16 is newly started.

According to the hardware configuration given above, in the same way of the aforementioned software processing, the band of one slot may be made a relatively wide band capable of transmitting the video data without missing frames, thereby, it is not necessary to calculate the number of slots capable of ensuring the necessary band at every transmission request for the video data, and then, the processing for assigning the video data to the slots may be reduced.

Since the band of the prepared one slot is a band required to transmit the video data, stable transmission speed may be kept and the band of the data bus 101 may be stably and efficiently controlled.

## Claims

1. A video data processor (100) in which a plurality of devices (106-109, 200) each processing video data are connected to a data bus (101) and the video data is transmitted and received among arbitrary devices by using the data bus (101), **characterized by** comprising:
a control unit (104) which cyclically defines a plurality of slots in a fixed burst cycle indicating a band for transmitting the video data through the data bus (101), assigns the video data to the slots in response to a transmission request, and transmits the video data assigned to permitted slots through the data bus (101);
a slot management unit (105) which creates slot management information in which slots with the video data assigned thereto for each slot are associated with management information showing transmission origins and transmission destinations of the video data to registration-update the management information; and
a bus arbitration unit (103) which arbitrates the video data to be assigned to the slots and to be transmitted through the data bus (101) by referring to the slot management unit (105), wherein
the control unit (104) sets bust cycles and the number of the slots to which the video data is assigned so as to make transmission speed for reproducing the video data normal speed; and
the bus arbitration unit (103) sequentially specifies only the slots to which the video data assigned, and permits transmission of the video data to the data bus (101), on the basis of the slot management information registered in the slot management unit (105).

2. The video data processor according to claim 1,
**characterized in that:**
the bus arbiter (103) is kept in a standby state for a time corresponding to the burst cycle after the transmission of the slot is permitted, and then permits transmission of the next slot.

3. The video data processor according to claim 2, **characterized by** further comprising:
at least one free time assignment slot configured to assign a plurality of items of video data in turn among the plurality of slots, wherein
the slot management unit (105) associates the free time assignment slots with each item of management information of the video data assigned to the free time assignment slots to further generate and register management information peculiar to the free time assignment slots, and
the bus arbitration unit (103) permits the video data, assigned to the free time assignment slots by using the free time assignment slots, to be sequentially transmitted at every burst cycle when the video data is not being transmitted through the data bus (101).

4. The video data processor according to claim 3,
**characterized in that**
the slot management unit (105) further registers use resource information showing at least the number of resources to be used and use resource information showing a resource consumed amount for each transmission type of the video data; and
the control unit (104) assigns the video data to slots other than the free time assignment slots in a case of video data of a transmission type of which the transmission speed is constant, and assigns the video data to the free time assignment slots in a case of video data of a transmission type of which the transmission speed is not necessary to be constant on the basis of the use resource information.

5. A data bus management method in which a plurality of devices (106-109, 200) each processing video data are connected to a data bus (101) and the video data is transmitted and received among arbitrary devices by using the data bus (101), **characterized by** comprising:
control-processing which cyclically defines a plurality of slots in a fixed burst cycle indicating a band for transmitting the video data to the data bus (101), assigns the video data to the slots in response to a transmission request, and transmits the video data assigned to permitted slots through the data bus (101);
slot-management-processing which creates slot management information in which slots with the video data assigned thereto for each slot are associated with management information showing transmission origins and transmission destinations of the video data to registration-update the management information; and
bus-arbitration-processing which arbitrates the video data to be assigned to the slots and to be transmitted through the data bus (101) by referring to the slot management information, wherein
the control-processing sets burst cycles and the number of the slots to which the video data is assigned so as to make transmission speed for reproducing the video data normal speed; and
the bus arbitration processing sequentially specifies only the slots to which the video data assigned, and permits transmission of the video data to the data bus (101), on the basis of the slot management information registered in the slot management processing.

6. The data bus management method according to claim 5, **characterized in that:**
the bus arbitration processing includes keeping a standby state for a time corresponding to the burst cycle after the transmission of the slot is permitted, and then permitting transmission of the next slot.

7. The data bus management method of the video data processor according to claim 6, **characterized by** further comprising:
at least one free time assignment slot configured to assign a plurality of items of video data in turn among the plurality of slots, wherein
the slot management processing associates the free time assignment slots with each item of management information of the video data assigned to the free time assignment slots to further generate and register management information peculiar to the free time assignment slots, and
the bus arbitration processing permits the video data, assigned to the free time assignment slots by using the free time assignment slots, to be sequentially transmitted at every burst cycle when the video data is not being transmitted through the data bus (101).

8. The data bus management method of the data bus management method according to claim 7, **characterized in that**
the slot management processing further registers use resource information showing at least the number of resources to be used and a resource consumed amount for each transmission type of the video data; and
the control processing assigns the video data to slots other than the free time assignment slots in a case of video data of a transmission type of which the transmission speed is constant, and assigns the video data to the free time assignment slot in a case of video data of a transmission type of which the transmission speed is not necessary to be constant on the basis of the use resource information.
